# EUROPEAN PATENT SPECIFICATION

(11) **EP 1 156 653 B1**
(45) Date of publication and mention of the grant of the patent: **08.09.2004**
(21) Application number: 00440139.4
(22) Date of filing: 15.05.2000
(51) Int. Cl.: H04M 3/533

(54) **Method and system to retrieve messages**
Verfahren und System zum Zurückholen von Meldungen
Méthode et système pour rechercher des messages

(43) Date of publication of application: 21.11.2001
(73) Proprietor: ALCATEL, 75008 Paris (FR)
(72) Inventor: Endler, Joachim, 70435 Stuttgart (DE)
(74) Representative: Rausch, Gabriele, Dr.

(56) References cited:
- EP-A- 0 106 575
- US-A- 5 703 937
- US-A- 5 926 526

## Description

The invention relates to a telecommunication system comprising a switch and a memory for storing at least one message originating from a first terminal and destined for a second terminal.

Such a telecommunication system is known from for example US 5,751,794 - Proactive Voice Mail Service - in which a message for a customer is stored in a server in case of this customer not answering an incoming call or already being involved in an other call, after which a status of the line is frequently tested to be able to deliver the message.

Such a telecommunication system is disadvantageous, inter alia, due to the frequently testing making it inefficient.

US 5,703,937 discloses a voice processing system, whereby two parties, e.g. a client and an attorney, can communicate with each other without direct contact between the two parties. The client can leave a message for the attorney at the attorney's voice system. The clients telephone number is used for identification or an identification number is given to the client. The attorney is informed about the clients message. By accessing the attorney's voice system, the attorney can select a message, listen to the message and record a reply to the message. Then, the client might call the attorney's voice system, give his identification number and receive the attorney's recorded response.

US 5,926,526 discloses an automated patient information system for notifying patients of medical information. Medical providers stores medical patient information in voice mailboxes. The access to the mailboxes is protected by a provider identification number and an identification access code. The system can automatically call patients to notify of pending medical information. Patient have to enter a medical provider ID, a patient ID and a security code before information may by accessed by a patient. This access information is supplied by the medical provider to a patient in advance, for example an a written card.

It is an object of the invention to provide a telecommunication system, a switch, a method, which enables a more efficient handling of messages.

This object is attained by a telecommunication system described in claim 1, a switch described in claim 5, and a method described in claim.

Thereto, the telecommunication system according to the invention is characterised in that the switch comprising a detector for detecting the specific signal and comprising a processor, wherein, if the first user of the first terminal has left a specific message for the second user of the second terminal in the memory, in response to the detecting a speech connection is set up by the processor between the second terminal and the memory for receiving the stored message, although the second user has called the first user of the first terminal.

By introducing the specific signal, the switch is informed of the user of the second terminal being interested in a specific message, and as a result, in case a message of the first user is left for the second user, the second user is connected with the memory for receiving the message, even if the second user has called the first terminal.

The invention is based on the insight, inter alia, that frequently testing can be avoided by detecting a user action and/or a user presence.

Furthermore it is ensured, that the second user is informed about the message of the first user for him, before a call connection between the first and the second user is established or the first and second terminal respectively.

A first embodiment of the telecommunication system according to the invention is characterised in that the specific signal comprises a destination signal defining a destination of the first terminal and/or comprises a predefined specific code.

In case of the specific signal comprising the destination signal defining a destination of the first terminal (for example a (part of a) telephone number of the first terminal and/or an identification of the user of the first terminal due to the user of the second terminal being interested in a specific message from (the user of) this specific first terminal or for example the telephone number of the first terminal due to the user of the second terminal needing to make a call with the user of the first terminal), and/or in case of the specific signal comprising the predefined specific code (for example #00# etc.), the specific signal comprises detailed info allowing the system to react more specifically.

A second embodiment of the telecommunication system according to the invention is characterised in that the first terminal comprises a further generator for generating an indication signal to be sent to the switch and defining at least one message originating from a user of the first terminal being a specific message, with the switch comprising a further detector for detecting the indication signal.

By introducing the indication signal, the switch is informed of the user of the first terminal generating a specific message. Such an indication signal allows the user of the first terminal for example to choose whether a message should be regarded to be specific or not.

A third embodiment of the telecommunication system according to the invention is characterised in that the indication signal comprises a destination signal defining a destination of the second terminal and/or comprises a predefined indication code.

In case of the indication signal comprising the destination signal defining a destination of the second terminal (for example a (part of a) telephone number of the second terminal and/or an identification of the user of the second terminal due to the user of the first terminal being interested in reaching (the user of) this indicated second terminal or for example the telephone number of the second terminal due to the user of the first terminal needing to make a call with the user of the second terminal), and/or in case of the indication signal comprising the predefined indication code (for example

#99# etc.), the indication signal comprises detailed info allowing the system to react as indicated precisely.

The invention further relates to a switch for use in a telecommunication system according to the invention comprising a detector for detecting a specific signal originating from the second terminal and defining a user of the second terminal being interested in at least one specific message originating form a first user a first terminal and destined for the second user of the second terminal, and comprising a processor, wherein, if the first user of the first terminal has left a specific message for the second user of the second terminal in the memory, in response to the detecting a speech connection is set up by the processor between the second terminal and the memory for receiving the stored message, although the second user has called the first user of the first terminal.

A first embodiment of the switch according to the invention is characterised in that, the specific signal comprises a destination signal defining a destination of the first terminal and/or comprises a predefined specific code.

A second embodiment of the switch according to the invention is characterised in that the switch comprises a further detector for detecting an indication signal originating from the first terminal and defining at least one message originating from a user of the first terminal being a specific message.

A third embodiment of the switch according to the invention is characterised in that the indication signal comprises a destination signal defining a destination of the second terminal and/or comprises a predefined indication code.

The invention also relates to a method for use in a telecommunication system according to the invention, wherein the terminal comprises a generator for generating a specific signal to be sent to a switch, wherein the specific signal is adapted such, that, if a specific message has been left for a user to the terminal in a memory, in response to a detecting of the specific signal at the switch a speech connection is set up between the terminal and the memory, although the user of the terminal has called the originating terminal of the message.

Embodiments of the method according to the invention are characterised in that the method comprises the steps of the specific signal comprising a destination signal defining a destination of the first terminal and/or comprising a predefined specific code, and/or of generating an indication signal to be sent to the switch and defining at least one message originating from a user of the first terminal being a specific message and of detecting the indication signal, and/or of the indication signal comprising a destination signal defining a destination of the second terminal and/or comprising a predefined indication code.

The document US 5,751,794 discloses a proactive voice mail service which is completely different from the telecommunication system according to the invention, which invention solves the problem as defined at the hand of the document.

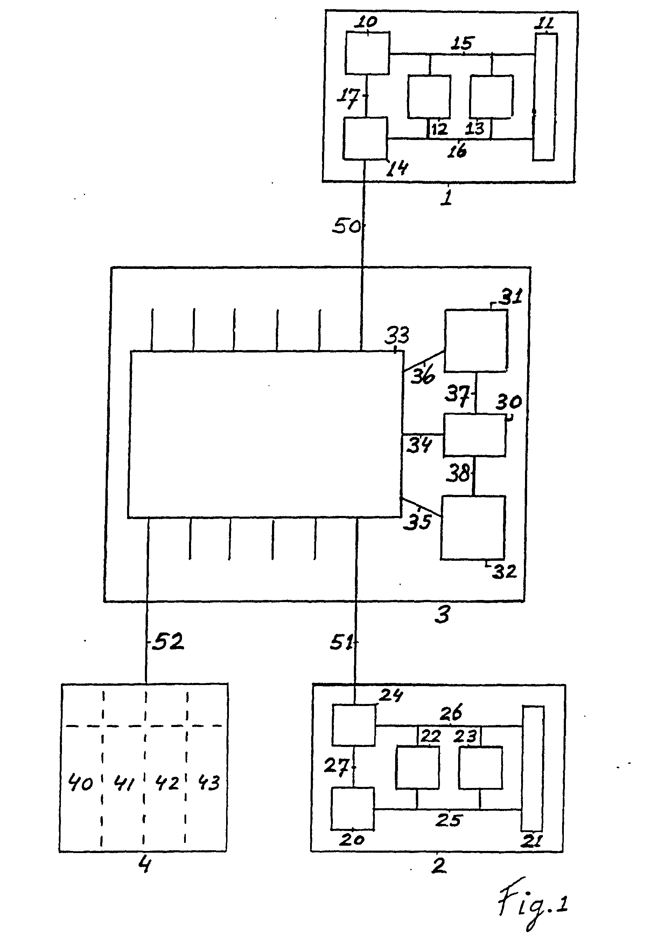

The invention will be further explained at the hand of embodiments described with respect to a drawing, whereby
figure 1 discloses a telecommunication system according to the invention comprising a switch according to the invention and terminals according to the invention.

In figure 1, a first terminal 1 according to the invention comprises a processor 10 coupled via a control bus 15 to a man-machine-interface (mmi) 11 and to a generator 12 and to a memory 13. Processor 10 is coupled via a control connection 17 to a transceiver 14, which via a bus 16 is coupled to said mmi 11 and to said generator 12 and to said memory 13. Transceiver 17 is further coupled via a connection 50 to switch 3. A second terminal 2 according to the invention comprises a processor 20 coupled via a control bus 25 to a man-machine-interface (mmi) 21 and to a generator 22 and to a memory 23. Processor 20 is coupled via a control connection 27 to a transceiver 24, which via a bus 26 is coupled to said mmi 21 and to said generator 22 and to said memory 23. Transceiver 27 is further coupled via a connection 51 to switch 3. Switch 3 comprises a coupler 33 coupled to connection 50 and 51 and via a connection 52 to a memory 4 comprising at least four parts 41-44. Coupler 33 in switch 3 is coupled to a processor 30 via a control connection 34 and to a memory 31 via a control connection 36 and to a detector 32 via a control connection 35, whereby processor 30 is coupled to memory 31 via a control connection 37 and to detector 32 via a control connection 38.

The telecommunication system according to the invention comprising terminals 1,2 according to the invention and switch 3 according to the invention functions as follows.

According to a first embodiment, a first user of terminal 1 decides to call a second user of terminal 2. Thereto, said first user enters a telephone number of said terminal 2 at mmi 11. Via control bus 15, processor 10 is informed, which controls mmi 11 via control bus 15 and transceiver 14 via control connection 17 in such a way that said telephone number via bus 16 and generator 12 (possibly in cooperation with memory 13) and transceiver 14 and connection 50 is sent to switch 3 in the form of a signalling signal (being an indication signal comprising a destination signal defining a destination of said terminal 2). In switch 3, said telephone number is supplied via coupler 33 and control connection 34 to processor 30, which in response consults memory 31 and/or detector 32 to verfiy whether said second user of terminal 2 can be reached at terminal 2 or not (due to for example a follow-me function being activated or due to for example terminal 2 being busy) and whether said second user of terminal 2 should be reached or not (due to for example said second user having left a message in memory 4), and in case of said second user being reachable at terminal 2, processor 30 tries to set up a speech connection between terminal 1 and terminal 2 and starts a timer function.

Due to for example either said terminal 2 being busy or not having answered said call within a time interval defined by said timer function, processor 30 will decide to set up a speech connection between terminal 1 and memory 4 (like for example a voice mail system) via connection 50 and coupler 33 and connection 52, in response to which said first user of terminal 1 receives a spoken message informing him that he has been connected to said memory and that he could leave his message behind after the beep.

After some time, said second user decides to call said first user, and enters the telephone number of said terminal 1 at mmi 21. Via control bus 25, processor 20 is informed, which controls mmi 21 via control bus 25 and transceiver 24 via control connection 27 in such a way that said telephone number via bus 26 and generator 22 (possibly in cooperation with memory 23) and transceiver 24 and connection 51 is sent to switch 3 in the form of a signalling signal (being a specific signal comprising a destination signal defining a destination of said terminal 1). In switch 3, said telephone number is supplied via coupler 33 and control connection 34 to processor 30, which in response consults memory 31 and/or detector 32 to verify whether said first user of terminal 1 can be reached at terminal 1 or not (due to for example a follow-me function being activated or due to for example terminal 1 being busy) and whether said first user of terminal 1 should be reached or not (due to for example said first user having left a message in memory 4). This time, processor 30 finds out that said first user of terminal 1 has left a message for said second user in memory 4 (which message is stored in memory 4 at an address, which address for example is stored in memory 31 in combination with said telephone number of said first terminal and/or of said second terminal), and as a result a speech connection is set up between terminal 2 and memory 4 via connection 51 and coupler 33 and connection 52, in response to which said second user of terminal 2 receives said stored message as left behind by said first user. So, according to the invention, in response to said specific signal (the telephone number of said first user who has left a message in the voice mail system), said second user is automatically connected to said voice mail system for getting said specific message (non-specific messages can for example be got by dialling the number of said voice mail system).

According to a first alternative to said first embodiment, a first user of terminal 1 decides to call a second user of terminal 2, and as described before, said first user of terminal 1 receives said spoken message informing him that he has been connected to said memory and that he could leave his message behind after the beep.

After some time, said second user decides to check his mail box, whereby he is interested in specific messages only originating from said first user. Thereto, he enters a predefined specific code (for example #00#) at mmi 21. Via control bus 25, processor 20 is informed, which controls mmi 21 via control bus 25 and transceiver 24 via control connection 27 in such a way that said predefined specific code via bus 26 and generator 22 (possibly in cooperation with memory 23) and transceiver 24 and connection 51 is sent to switch 3 in the form of a signalling signal (being a specific signal comprising said predefined specific code). In switch 3, said predefined specific code is supplied via coupler 33 and control connection 34 to processor 30, which in response consults memory 31 and/or detector 32. Processor 30 finds out that said first user of terminal 1 has left a message for said second user in memory 4 (which message is stored in memory 4 at an address, which address for example is stored in memory 31 in combination with said telephone number of said first terminal and/or of said second terminal and/or with said predefined specific code), and as a result a speech connection is set up between terminal 2 and memory 4 via connection 51 and coupler 33 and connection 52, in response to which said second user of terminal 2 receives said stored message as left behind by said first user. So, according to the invention, in response to said specific signal (the predefined specific code), said second user is automatically connected to said voice mail system for getting said specific message only (non-specific messages and/or all messages can for example be got by dialling the number of said voice mail system).

According to a second alternative to said first embodiment, a first user of terminal 1 decides to call a second user of terminal 2, and as described before, said first user of terminal 1 receives said spoken message informing him that he has been connected to said memory and that he could leave his message behind after the beep.

After some time, said second user decides to call said first user, and enters the telephone number of said terminal 1 at mmi 21, together with a predefined specific code (for example #00#), which predefined specific code defines that he is interested in specific messages only originating from said first user. Via control bus 25, processor 20 is informed, which controls mmi 21 via control bus 25 and transceiver 24 via control connection 27 in such a way that said telephone number together with said predefined specific code via bus 26 and generator 22 (possibly in cooperation with memory 23) and transceiver 24 and connection 51 is sent to switch 3 in the form of a signalling signal (being a specific signal comprising a destination signal defining a destination of said terminal 1 as well as said predefined specific code). In switch 3, said telephone number and predefined specific code are supplied via coupler 33 and control connection 34 to processor 30, which in response consults memory 31 and/or detector 32 to verfiy whether said first user of terminal 1 can be reached at terminal 1 or not (due to for example a follow-me function being activated or due to for example terminal 1 being busy) and whether said first user of terminal 1 should be reached or not (due to for example said first user having left a message in memory 4). This time, processor 30 finds out that said first user of terminal 1 has left a message for said second user in memory 4 (which message is stored in memory 4 at an address, which address for example is stored in memory 31 in combination with said telephone number of said first terminal and/or of said second terminal and/or with said predefined specific code), and as a result a speech connection is set up between terminal 2 and memory 4 via connection 51 and coupler 33 and connection 52, in response to which said second user of terminal 2 receives said stored message as left behind by said first user. So, according to the invention, in response to said specific signal (the telephone number of said first user who has left a message in the voice mail system together with said predefined specific code), said second user is automatically connected to said voice mail system for getting said specific message (non-specific messages can for example be got by dialling the number of said voice mail system).

According to a third alternative to said first embodiment, a first user of terminal 1 decides to leave a specific message behind in memory 4 for a second user of terminal 2. Thereto, said first user enters a predefined indication code (for example #99#) at mmi 11. Via control bus 15, processor 10 is informed, which controls mmi 11 via control bus 15 and transceiver 14 via control connection 17 in such a way that said predefined indication code via bus 16 and generator 12 (possibly in cooperation with memory 13) and transceiver 14 and connection 50 is sent to switch 3 in the form of a signalling signal (being an indication signal comprising said predefined indication code). In switch 3, said predefined indication code is supplied via coupler 33 and control connection 34 to processor 30, which in response consults memory 31 and/or detector 32. Processor 30 then decides to set up a speech connection between terminal 1 and memory 4 (like for example a voice mail system) via connection 50 and coupler 33 and connection 52, in response to which said first user of terminal 1 receives a spoken message informing him that he has been connected to said memory and that he could leave his message behind after the beep.

After some time, said second user decides to call said first user, and enters the telephone number of said terminal 1 at mmi 21, or said second user decides to check his mail box, whereby he is interested in specific messages only originating from said first user, or said second user decides to call said first user, and enters the telephone number of said terminal 1 at mmi 21, together with a predefined specific code (for example #00#), which predefined specific code defines that he is interested in specific messages only originating from said first user, etc. as described before.

According to a fourth alternative to said first embodiment, a first user of terminal 1 decides to call a second user of terminal 2. Thereto, said first user enters a telephone number of said terminal 2 at mmi 11, together with a predefined indication code (for example #99#), which predefined indication code defines that he is interested in leaving behind a specific message in memory 4 destined for said second user, in case said second user cannot be reached, etc. as described before.

According to a fifth alternative to said first embodiment, a first user of terminal 1 decides to call a second user of terminal 2, and as described before, said first user of terminal 1 receives said spoken message informing him that he has been connected to said memory and that he could leave his message behind after the beep. This time, said first user has the option of leaving behind a specific message (by entering the predefined indication code) or not, etc.

According to a second embodiment, a first user of terminal 1 directly contacts memory 4 by entering a telephone number of this voice mail system, with a destination signal defining a destination of a second user of terminal 2 being added to this telephone number or being added to the message to be entered, etc.

According to a first alternative to said second embodiment, said first user not just enters said telephone number, but also enters a predefined indication code, with a destination signal defining a destination of a second user of terminal 2 being added to this telephone number and/or predefined indication code or being added to the message to be entered, etc.

According to a second alternative to said second embodiment, said first user just enters said predefined indication code, with a destination signal defining a destination of a second user of terminal 2 being added to this predefined indication code or being added to the message to be entered, etc.

According to a third alternative to said second embodiment, said first user enters said predefined indication code after said speech connection has been established just before or together with his message, etc.

According to a third embodiment, switch 3 (read: detector 32) detects a telephone number of terminal 1 and/or a predefined indication code and/or a telephone number of terminal 2 and in dependence connects or tries to connect terminal 1 with either terminal 2 or memory 4 and in dependence defines messages to be specific or non-specific, etc.

Said connections 50, 51 and 52 can be analog connections, digital connections, ISDN connections, wireless (for example) DECT connections, mobile (for example GSM, UMTS) connections, and/or may form part of so-called always-on-IP-connections (to be created by for example using xDSL, ISDN, GPRS etc., see for example EP-99440311.1). Said switch 3 located between both terminals 1 and 2 is not necessarily the only switch between both terminals, generally there can be more than one switch, and/or said switch could comprise several subsystems like in an Intelligent Network or IN environment where there are SSPs (Service Switching Points) and SCPs (Service Control Points), in which case coupler 33 for example forms part of a SSP and processor 30 forms part of a SCP. A Universal Personal Telephony system or UPT is not to be excluded, wereby said (fixed/wireless/mobile) terminals will be provided with a temporarily telephone number in dependence of (an identification of) a user. These temporarily telephone numbers will generally be stored in (memory 31 of) switch 3.

Said generators and detectors are either hardware components or software components or mixtures of both. (Parts of) Functions of terminals 1,2 can be shifted into switch 3, and vice versa. (Parts of) Functions of switch 3 can be shifted into memory 4, and vice versa. The addressing of memory 4 can be organised in switch 3, as described, but could also be managed in memory 4. Memory 4 comprises four parts 40-43, for example four columns, with a column 40 being destined for an address of a message, column 41 being destined for telephone numbers defining an origin of a message, column 42 deing destined for telephone numbers defining a destination of a message, and column 43 being destined for said message. But many more columns (in general parts) are possible, for example for storing a message being a specific one or not. Further, in view of said possibly shifting of functions from switch 3 into memory 4 and vice versa, it should be noted that memories 4 and 31 could be more or less integrated and then located either inside switch 3 or outside, etc.

The term 'message' should not be limited to 'voice message', but may include other kinds of messages like data, email, video etc. In case of said terminals being screenphones (like defined in EP-90727X with X= 1,2,3,4,5), a user could leave behind a video message. Or, in view of the Internet being used more and more often, a user could leave behind an email, or a data signal defining that an email has been sent, or an address of a website, whereby this information either is shown on (a display of) the receiving terminal or is converted into speech, etc. In view of this, said specific signal and/or said indication signal may also define the kind of message, in other words whether said specific message is a video message or email message or data message etc.

## Claims

1. Telecommunication system comprising a switch, a first terminal, a second terminal and a memory for storing at least one message originating from a first user of said first terminal and destined for a second user of said second terminal, said second terminal comprises a generator for generating a specific signal to be sent to said switch and defining a user of said second terminal being interested in at least one specific message, said switch comprising a detector for detecting said specific signal and comprising a processors, **characterised in that**, if the first user of said first terminal has left a specific message for the second user of said second terminal in said memory, in response to said detecting, a speech connection is set up by said processor between said second terminal and said memory for receiving said stored message, although the second user has called the first user of said first terminal.

2. Telecommunication system according to claim 1, **characterized in that** said specific signal comprises a destination signal defining a destination of said first terminal and/or comprises a predefined specific code.

3. Telecommunication system according to claim 1 or 2, **characterized in that** said first terminal comprises a further generator for generating an indication signal to be sent to said switch and defining at least one message originating from a user of said first terminal being a specific message, with said switch comprising a further detector for detecting said indication signal.

4. Telecommunication system according to claim 3, **characterized in that** said indication signal comprises a destination signal defining a destination of said second terminal and/or comprises a predefined indication code.

5. Switch for use in a telecommunication system according to claim 1 to 4, comprising a detector for detecting a specific signal originating from said second terminal and defining a user of said second terminal being interested in at least one specific message originating from a first user of said first terminal and destined for the second user of said second terminal, and comprising a processor wherein, if the first user of said first terminal has left a specific message for the second user of said second terminal in said memory, in response to said detecting, a speech connection is set up by said processor between said second terminal and said memory for receiving said stored message, although the second user has called the first user of said first terminal.

6. Switch according to claim 5, **characterized in that** said detector detects a specific signal comprising a destination signal defining a destination of said first terminal and/or comprising a predefined specific code.

7. Switch according to claim 5 or 6, **characterized in that** said switch comprises a further detector for detecting an indication signal originating from said first terminal and defining at least one message originating from a user of said first terminal being a specific message.

8. Switch according to claim 7, **characterized in that** said further detector detects an indication signal comprising a destination signal defining a destination of said second terminal and/or comprising a predefined indication code.

9. Method for use in a telecommunication system according to claim 1 to 4, **characterized in** the steps generating a specific signal to be sent to a switch by a generator in said terminal adapting said specific signal a specific message leaving for a user to said terminal in a memory, detecting said specific signal at the switch, setting up a speech connection between the terminal and said memory, although the user of said terminal has called the originating terminal of said message..

## Patentansprüche

1. Telekommunikationssystem, das eine Vermittlung, ein erstes Endgerät, ein zweites Endgerät und einen Speicher zur Speicherung mindestens einer Nachricht enthält, die von einem ersten Teilnehmer am ersten Endgerät kommt und an einen zweiten Teilnehmer an einem zweiten Endgerät gerichtet ist, wobei das zweite Endgerät einen Generator zur Erzeugung eines speziellen Signals, das an die Vermittlung zu senden ist, enthält und das definiert, dass ein Teilnehmer an dem zweiten Endgerät an mindestens einer speziellen Nachricht interessiert ist, wobei die Vermittlung einen Detektor zur Erkennung des speziellen Signals und einen Prozessor enthält, **dadurch gekennzeichnet, dass** wenn der erste Teilnehmer am ersten Endgerät im Speicher eine spezielle Nachricht für den Teilnehmer am zweiten Endgerät hinterlassen hat, als Reaktion auf die Erkennung vom Prozessor eine Sprachverbindung zwischen dem zweiten Endgerät und dem Speicher aufgebaut wird, um die gespeicherte Nachricht zu empfangen, obwohl der zweite Teilnehmer den ersten Teilnehmer des ersten Endgerätes angerufen hat.

2. Telekommunikationssystem gemäß Anspruch 1, **dadurch gekennzeichnet, dass** das spezielle Signal ein Ziel-Signal enthält, das ein Ziel des ersten Endgerätes definiert und/oder einen vordefinieren speziellen Code enthält.

3. Telekommunikationssystem gemäß Anspruch 1 oder 2, **dadurch gekennzeichnet, dass** das erste Endgerät einen weiteren Generator zur Erzeugung eines Anzeige-Signals enthält, das an die Vermittlung zu senden ist, und mindestens eine Nachricht, die von einem Teilnehmer am ersten Endgerätes kommt, als spezielle Nachricht definiert, wobei die Vermittlung einen weiteren Detektor zur Erkennung des Anzeige-Signals enthält.

4. Telekommunikationssystem gemäß Anspruch 3, **dadurch gekennzeichnet, dass** das Anzeige-Signal ein Ziel-Signal enthält, das ein Ziel des zweiten Endgerätes definiert und/oder einen vordefinieren speziellen Anzeige-Code enthält.

5. Vermittlung für die Verwendung in einem Telekommunikationssystem gemäß Anspruch 1 bis 4, die einen Detektor zur Erkennung eines speziellen Signals enthält, das vom zweiten Endgerät kommt, und definiert, dass ein Teilnehmer am zweiten Endgerät an mindestens einer speziellen Nachricht interessiert ist, die von einem ersten Teilnehmer am ersten Endgerät kommt und an den zweiten Teilnehmer am zweiten Endgerät gerichtet ist, und die einen Prozessor enthält, wobei wenn der erste Teilnehmer am ersten Endgerät im Speicher eine spezielle Nachricht für den zweiten Teilnehmer am zweiten Endgerät hinterlassen hat, als Reaktion auf die Erkennung vom Prozessor eine Sprachverbindung zwischen dem zweiten Endgerät und dem Speicher aufgebaut wird, um die gespeicherte Nachricht zu empfangen, obwohl der zweite Teilnehmer den ersten Teilnehmer des ersten Endgerätes angerufen hat.

6. Vermittlung gemäß Anspruch 5, **dadurch gekennzeichnet, dass** der Detektor ein spezielles Signal erkennt, das ein Ziel-Signal enthält, welches ein Ziel des ersten Endgerätes definiert und/oder einen vordefinierten speziellen Code enthält.

7. Vermittlung gemäß Anspruch 5 oder 6, **dadurch gekennzeichnet, dass** die Vermittlung einen weiteren Detektor zur Erkennung eines Anzeige-Signals enthält, das vom ersten Endgerät kommt, und mindestens eine Nachricht, die von einem Teilnehmer am ersten Endgerät kommt, als spezielle Nachricht definiert.

8. Vermittlung gemäß Anspruch 7, **dadurch gekennzeichnet, dass** der weitere Detektor ein Anzeige-Signal erkennt, das ein Ziel-Signal enthält, welches ein Ziel des zweiten Endgerätes definiert und/oder einen vordefinierten Anzeige-Code enthält.

9. Verfahren für die Verwendung in einem Telekommunikationssystem gemäß Anspruch 1 bis 4, durch die Schritte **gekennzeichnet**, dass ein spezielles Signal erzeugt wird, das zu einer Vermittlung zu senden ist, dass das spezielle Signal von einem Generator in dem Endgerät angepasst wird, dass im Speicher eine spezielle Nachricht für einen Teilnehmer an dem Endgerät hinterlassen wird, dass das spezielle Signal an der Vermittlung erkannt wird und dass eine Sprachverbindung zwischen dem Endgerät und dem Speicher aufgebaut wird, obwohl der Teilnehmer an dem Endgerät das Endgerät angerufen hat, von dem die Nachricht kommt.

## Revendications

1. Système de télécommunication comprenant un commutateur, un premier terminal, un deuxième terminal et une mémoire pour mémoriser au moins un message provenant d'un premier utilisateur dudit premier terminal et destiné à un deuxième utilisateur dudit deuxième terminal, ledit deuxième terminal comprend un générateur pour générer un signal spécifique à envoyer au dit commutateur et définissant qu'un utilisateur dudit deuxième terminal est intéressé au moins par un message spécifique, ledit commutateur comprenant un détecteur pour détecter ledit signal spécifique et comprenant un processeur, **caractérisé en ce que**, si le premier utilisateur dudit premier terminal a laissé un message spécifique pour le deuxième utilisateur dudit deuxième terminal dans ladite mémoire, en réponse à ladite détection, une connexion vocale est établie par ledit processeur entre ledit deuxième terminal et ladite mémoire pour recevoir ledit message mémorisé, bien que le deuxième utilisateur ait appelé le premier utilisateur dudit premier terminal.

2. Système de télécommunication selon la revendication 1, **caractérisé en ce que** ledit signal spécifique comprend un signal de destination définissant une destination dudit premier terminal et/ou comprend un code spécifique prédéfini.

3. Système de télécommunication selon la revendication 1 ou 2, **caractérisé en ce que** ledit premier terminal comprend un générateur supplémentaire pour générer un signal d'indication à envoyer au dit commutateur et définissant au moins un message provenant d'un utilisateur dudit premier terminal comme étant un message spécifique, ledit commutateur comprenant un détecteur supplémentaire pour détecter ledit signal d'indication.

4. Système de télécommunication selon la revendication 3, **caractérisé en ce que** ledit signal d'indication comprend un signal de destination définissant une destination dudit deuxième terminal et/ou comprend un code d'indication prédéfini.

5. Commutateur pour une utilisation dans un système de télécommunication selon les revendications 1 à 4, comprenant un détecteur pour détecter un signal spécifique provenant dudit deuxième terminal et définissant un utilisateur dudit deuxième terminal comme étant intéressé par au moins un message spécifique provenant d'un premier utilisateur dudit premier terminal et destiné au deuxième utilisateur dudit deuxième terminal, et comprenant un processeur dans lequel, si le premier utilisateur dudit premier terminal a laissé un message spécifique pour le deuxième utilisateur dudit deuxième terminal dans ladite mémoire, en réponse à ladite détection, une connexion vocale est établie par ledit processeur entre ledit deuxième terminal et ladite mémoire pour recevoir ledit message mémorisé, bien que le deuxième utilisateur ait appelé le premier utilisateur dudit premier terminal.

6. Commutateur selon la revendication 5, **caractérisé en ce que** ledit détecteur détecte un signal spécifique comprenant un signal de destination définissant une destination dudit premier terminal et/ou comprenant un code spécifique prédéfini.

7. Commutateur selon la revendication 5 ou 6, **caractérisé en ce que** ledit commutateur comprend un détecteur supplémentaire pour détecter un signal d'indication provenant dudit premier terminal et définissant au moins un message provenant d'un utilisateur dudit premier terminal comme étant un message spécifique.

8. Commutateur selon la revendication 7, **caractérisé en ce que** ledit détecteur supplémentaire détecte un signal d'indication comprenant un signal de destination définissant une destination dudit deuxième terminal et/ou comprenant un code d'indication prédéfini.

9. Procédé pour une utilisation dans un système de télécommunication selon les revendications 1 à 4, **caractérisé par** les étapes consistant à générer un signal spécifique à envoyer à un commutateur par un générateur dans ledit terminal, à adapter ledit signal spécifique, à laisser un message spécifique pour un utilisateur dudit terminal dans une mémoire, à détecter ledit signal spécifique au niveau du commutateur, à établir une connexion vocale entre le terminal et ladite mémoire, bien que l'utilisateur dudit terminal ait appelé le terminal d'origine dudit message.
